# EUROPÄISCHE PATENTSCHRIFT

(11) **EP 2 179 402 B1**
(45) Veröffentlichungstag und Bekanntmachung des Hinweises auf die Patenterteilung: **12.09.2018**
(21) Anmeldenummer: 08775072.5
(22) Anmeldetag: 15.07.2008
(51) Int. Cl.: G07C 5/08, G06K 7/00, G06K 13/08

(54) **VERFAHREN ZUM BETRIEB EINES FAHRTSCHREIBERS EINES KRAFTFAHRZEUGES**
METHOD FOR OPERATING A TRIP RECORDER OF A MOTOR VEHICLE
PROCÉDÉ POUR FAIRE FONCTIONNER UN TACHYGRAPHE D'UN VÉHICULE AUTOMOBILE

(30) Priorität: 13.08.2007 DE 102007038229
(43) Veröffentlichungstag der Anmeldung: 28.04.2010
(73) Patentinhaber: Continental Automotive GmbH, 30165 Hannover (DE)
(72) Erfinder: HOFFMANN, Klaus, 78050 Villingen-Schwenningen (DE); NÄTHER,Horst, 78052 Villingen-Schwenningen (DE)
(86) Internationale Anmeldenummer: PCT/EP2008/059212
(87) Internationale Veröffentlichungsnummer: WO 2009/021798

(56) Entgegenhaltungen:
- EP-A- 0 490 860
- EP-A1- 1 982 311
- WO-A-02/073543
- DE-C2- 2 954 742

## Beschreibung

Die Erfindung betrifft ein Verfahren zum Betrieb eines Fahrtschreibers eines Kraftfahrzeuges, bei dem nach dem Einführen einer Speicherkarte in einen Schacht des Fahrtschreibers ein Antrieb zum vollständigen Einzug der Speicherkarte gestartet und anschließend der Versuch einer Kommunikation zwischen der vollständig in den Schacht eingezogenen Speicherkarte und dem Fahrtschreiber aufgebaut wird.

Fahrtschreiber für Kraftfahrzeuge, insbesondere für Lastkraftwagen, erfassen und werten Daten bezüglich einer Fahrtstrecke und eines Fahrers des Kraftfahrzeuges aus und sind aus der Praxis bekannt. Die Speicherkarte dient unter anderem zum Abspeichern der Daten des Fahrers, die in dem Fahrtschreiber erzeugt werden, und weist einen Chip mit Kontaktflächen auf.

Wenn die Speicherkarte verschmutzt oder beschädigt ist, können die Daten nicht mehr übertragen werden, was im ungünstigsten Fall dazu führt, dass eine größere Datenmenge verloren geht.

Bei den Chip aufweisenden Speicherkarten hat man bereits daran gedacht, die Übertragung der Daten auf die Speicherkarte zu überwachen und bei einem Fehler in der Übertragung der Daten die Speicherkarte ein Stück weit aus dem Schacht herauszufahren und anschließend wieder in den Schacht einzuziehen. Hierbei reiben Federkontakte im Gerät über die Kontaktflächen und beseitigen mögliche Verschmutzungen auf der Speicherkarte.

Man könnte daran denken, eine Speicherkarte mit einer Reinigungsoberfläche zu versehen und in den Fahrtschreiber einzuführen. Da jedoch die Leseeinrichtung nicht gleichzeitig gelesen und gereinigt werden kann, ist eine solche Speicherkarte mit Reinigungsoberfläche nur bei intakter Kommunikation zwischen der Leseeinrichtung im Fahrtschreiber und dem Speicher auf der Speicherkarte einsetzbar. Zudem benötigt diese Gestaltung einen konkreten Reinigungszyklus, was zu einem erhöhten konstruktiven Aufwand führt. Aus Dokument DE 29 54 742 C2 ist ein Verfahren zum Herstellen einer elektrischen Verbindung zwischen Anschlusskontakten eines elektrischen Apparats und zugeordneten Kontaktelementen einer Kreditkarte bekannt. Ein Rotationssinn eines Antriebsmotors zum Antrieb der Kreditkarte ist mittels eines Wechselschalters umkehrbar, und die Kreditkarte kann in eine Bewegung versetzt werden, um zu versuchen, einen einwandfreien Kontakt zwischen den Anschlusskontakten und den Kontaktelementen zu erzielen. Es wird eine Überprüfung durchgeführt, ob ein elektrischer Kontakt zwischen den Anschlusskontakten und den Kontaktelementen korrekt hergestellt worden ist.

Aus Dokument WO 02/073543 A2 ist eine Aufnahmevorrichtung für Chipkarten bekannt, wobei ein motorisch betätigtes Transportmittel vorgesehen sein kann. Eine Datenlese- und Transportroutine innerhalb der Aufnahmevorrichtung zwischen einer Lese-/Schreibstation der Chipkarte und einer Parkposition soll mehrmals wiederholt werden können.

Der Erfindung liegt das Problem zugrunde, ein Verfahren zum Betreiben eines Fahrtschreibers zu schaffen, mit welchem die Leseeinrichtung besonders einfach gereinigt werden kann.

Das Problem wird erfindungsgemäß dadurch gelöst, dass bei einer fehlerhaften Kommunikation der Speicherkarte mit dem Fahrtschreiber der Antrieb zur Bewegung der Speicherkarte ein Stück weit aus dem Schacht heraus und wieder hinein angesteuert wird und dass anschließend erneut eine Kommunikation zwischen der in dem Schacht eingeführten Speicherkarte und dem Fahrtschreiber aufgebaut wird und dass die Ansteuerung des Antriebs auch bei einer beliebigen Karte ohne Speicher erfolgt und dass zur Reinigung von Kontakten des Fahrtschreibers eine Reinigungskarte mit einer zur Reinigung der Leseeinrichtung entsprechend gestalteten Reinigungsoberfläche vorgesehen ist, welche eine fehlerhafte Kommunikation mit dem Fahrtschreiber erzeugt, und dass die Ansteuerung des Antriebs zum Einzug der Speicherkarte oder Reinigungskarte aus dem Schacht heraus und wieder in den Schacht herein zweimal unmittelbar hintereinander ausgeführt wird.

Durch diese Gestaltung wird von dem Fahrtschreiber jede Karte, mit der keine Kommunikation aufgebaut werden kann, so behandelt, als wäre sie eine Speicherkarte. Da die in den Schacht eingeführte Karte nicht erkannt werden muss, führt das erfindungsgemäße Verfahren nicht zu einer Erhöhung des baulichen Aufwandes des Fahrtschreibers. Ein spezieller Reinigungszyklus muss dank der Erfindung nicht geschaffen werden. Dies führt zu einer besonders einfachen Reinigung der Leseeinrichtung.

Zur weiteren Vereinfachung des erfindungsgemäßen Verfahrens ist zur Reinigung von Kontakten des Fahrtschreibers eine Reinigungskarte mit einer zur Reinigung der Leseeinrichtung entsprechend gestalteten Reinigungsoberfläche vorgesehen, welche eine fehlerhafte Kommunikation mit dem Fahrtschreiber erzeugt. Die fehlerhafte Kommunikation wird dank der Erfindung genutzt, um den Antrieb der Karte anzusteuern und damit die Leseeinrichtung und/oder die Speicherkarte zu reinigen. Wenn die Speicherkarte als Speicherkarte ausgebildet ist und die Leseeinrichtung entsprechend Federkontakte hat, werden die Kontakte der Speicherkarte durch Reibung gereinigt. Anstelle der Kontakte der Speicherkarte kann die Reinigungskarte auch mit einem Schleifmittel versehen werden, um die Federkontakte der Leseeinrichtung zu reinigen. Dabei führt die Ansteuerung des Antriebs zur Reinigung der Leseeinrichtung.

Bei starken Verschmutzungen ermöglicht das erfindungsgemäße Verfahren eine besonders gründliche Reinigung der Leseeinrichtung, weil die Ansteuerung des Antriebs zum Einzug der Speicherkarte oder der Reinigungskarte aus dem Schacht heraus und wieder in den Schacht herein zweimal unmittelbar hintereinander ausgeführt wird. Sofern eine Reinigung der Leseeinrichtung des Fahrtschreibers mit einer einzigen Bewegung nicht ausreichend ist, ist die Reinigung durch die zweimalige Bewegung schneller als wenn nach der ersten Bewegung der Speicherkarte oder der Reinigungskarte versucht wird, eine Kommunikation aufzubauen.

Eine endlose Bewegung der Speicherkarte oder der Reinigungskarte, bei der keine Kommunikation aufgebaut werden kann, lässt sich gemäß einer anderen vorteilhaften Weiterbildung der Erfindung einfach vermeiden, wenn nach einer vorgesehenen Anzahl von vergeblichen Versuchen zum Aufbau der Kommunikation zwischen der Speicherkarte und dem Gerät und anschließender Ansteuerung des Antriebs die Speicherkarte oder Reinigungskarte ausgeworfen wird.

Das erfindungsgemäße Verfahren ermöglicht eine ausreichende Reinigung von gewöhnlich verschmutzten Leseeinrichtungen, wenn die Anzahl der Versuche zum Aufbau der Kommunikation und anschließender Bewegung der Speicherkarte oder Reinigungskarte zwei beträgt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen Fahrtschreiber mit einer Reinigungskarte,
- Fig. 2: ein Flussdiagramm des erfindungsgemäßen Verfahrens zur Reinigung einer Leseeinrichtung aus Figur 1.

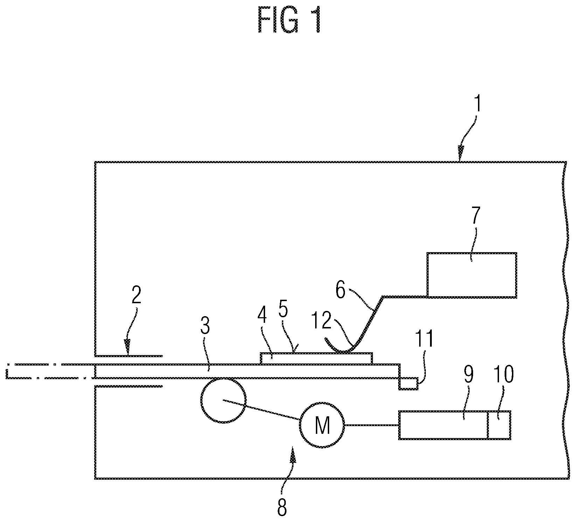

Figur 1 zeigt schematisch einen Fahrtschreiber 1 in einer Schnittdarstellung mit einem Schacht 2 zur Aufnahme einer Speicherkarte oder einer Reinigungskarte 3. Die Reinigungskarte 3 weist einen Filz 4 mit einer Reinigungsoberfläche 5 auf. Gegen die Reinigungsoberfläche 5 ist eine Leseeinrichtung 6 mit Federkontakten 12 des Fahrtenschreibers vorgespannt. Zur Vereinfachung der Zeichnung ist nur einer der Federkontakte 12 dargestellt. Die Federkontakte 12 sind mit einer elektronischen Einrichtung 7 zum Sammeln und Auswerten von Daten verbunden. Die Reinigungskarte 3 lässt sich von einem elektromotorischen Antrieb 8 in den Schacht 2 einziehen und aus diesem herausfahren. Das Vorhandensein einer beliebigen, in den Schacht eingeführten Karte wird von einem Kontaktschalter 11 erfasst. In der Zeichnung strichpunktiert dargestellt ist die Reinigungskarte 3 in einem ein Stück weit aus dem Schacht 2 herausgefahrenen Stellung, in der der Kontaktschalter 11 gerade betätigt wird. Der elektromotorische Antrieb 8 wird von einer Steuereinrichtung 9 angesteuert. Die Steuereinrichtung 9 weist einen Speicher 10 für Bedingungen und einer Anzahl von vorgesehenen Bewegungen der Reinigungskarte 3 durch den elektromotorischen Antrieb 8 auf.

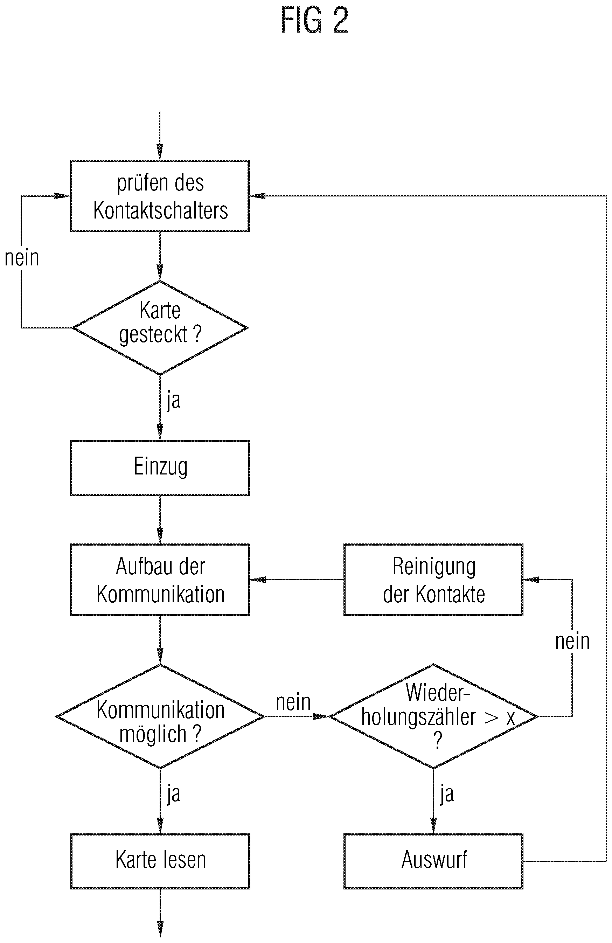

Figur 2 zeigt ein Flussdiagramm zur Durchführung eines Verfahrens zur Reinigung der Leseeinrichtung 6 mittels der Reinigungskarte 3 aus Figur 1. Das Verfahren wird durch Einführen der Reinigungskarte 3 in den Schacht 2 des Fahrtschreibers 1 gestartet. In einem ersten Schritt wird die Stellung des Kontaktschalters 11 geprüft. Gleichzeitig wird ein Zählwerk auf null gesetzt. Wenn der Kontaktschalter 11 von der Reinigungskarte 3 betätigt wurde, wird die Reinigungskarte 3 in einem zweiten Schritt eingezogen. Anschließend wird in einem dritten Schritt die Kommunikation des elektronischen Antriebs 8 mit der Reinigungskarte 3 aufgebaut. Da die Reinigungskarte 3 im Gegensatz zu einer Speicherkarte jedoch keine Kommunikation aufzubauen vermag, erfolgt in einem vierten Schritt die Reinigung der Leseeinrichtung 6, indem der elektromotorische Antrieb 8 aus Figur 1 angesteuert wird und die Reinigungskarte beispielsweise zweimal ein Stück weit aus dem Schacht 2 herausbewegt und wieder einzieht. Dabei wird ein Wiederholungszähler um den Betrag 1 erhöht. Anschließend erfolgt erneut der dritte Verfahrensschritt mit dem versuchten Aufbau der Kommunikation. Die Reinigungskarte 3 erzeugt einen weiteren Fehlschlag der Kommunikation wodurch erneut die Reinigung der Leseeinrichtung 6 erfolgt und der Wiederholungszähler um den Betrag 1 erhöht wird. Anschließend wird erneut die Kommunikation getestet und bei dem erneuten Fehlschlag die Reinigungskarte 3 in einem letzten Schritt ausgeworfen.

Wird anstelle der Reinigungskarte 3 eine Speicherkarte in den Schacht 2 eingeführt, entsteht bei einer verschmutzten Leseeinrichtung 6 oder einer verschmutzten Speicherkarte ebenfalls ein Fehler in der Kommunikation. Die Speicherkarte wird daher wie die Reinigungskarte 3 nach dem Einziehen und Herausschieben ausgeworfen oder die Verschmutzung auf der Leseeinrichtung 6 oder der Speicherkarte hat sich hierdurch gelöst und die Speicherkarte kann ausgelesen werden.

## Patentansprüche

1. Verfahren zum Betrieb eines Fahrtschreibers (1) eines Kraftfahrzeuges, bei dem nach dem Einführen einer Speicherkarte in einen Schacht (2) des Fahrtschreibers (1) ein Antrieb (8) zum vollständigen Einzug der Speicherkarte gestartet und anschließend der Versuch einer Kommunikation zwischen der vollständig in dem Schacht (2) eingezogenen Speicherkarte und dem Fahrtschreiber (1) aufgebaut wird, wobei bei einer fehlerhaften Kommunikation der Speicherkarte mit dem Fahrtschreiber (1) der Antrieb (8) zur Bewegung der Speicherkarte ein Stück weit aus dem Schacht (2) heraus und wieder hinein angesteuert wird und wobei anschließend erneut eine Kommunikation zwischen der in dem Schacht (2) eingeführten Speicherkarte und dem Fahrtschreiber (1) aufgebaut wird und wobei die Ansteuerung des Antriebs (8) auch bei einer beliebigen Karte ohne Speicher erfolgt, **dadurch gekennzeichnet, dass** zur Reinigung von Kontakten des Fahrtschreibers (1) eine Reinigungskarte (3) mit einer zur Reinigung der Leseeinrichtung entsprechend gestalteten Reinigungsoberfläche vorgesehen ist, welche eine fehlerhafte Kommunikation mit dem Fahrtschreiber (1) erzeugt, und dass die Ansteuerung des Antriebs zum Einzug der Speicherkarte oder Reinigungskarte (3) aus dem Schacht (2) heraus und wieder in den Schacht (2) herein zweimal unmittelbar hintereinander ausgeführt wird.

2. Verfahren nach Anspruch 1, **dadurch gekennzeichnet, dass** nach einer vorgesehenen Anzahl von vergeblichen Versuchen zum Aufbau der Kommunikation zwischen der Speicherkarte und dem Gerät und anschließender Ansteuerung des Antriebs die Speicherkarte oder Reinigungskarte ausgeworfen wird.

3. Verfahren nach zumindest einem der vorhergehenden Ansprüche, **dadurch gekennzeichnet, dass** die Anzahl der Versuche zum Aufbau der Kommunikation und anschließender Bewegung der Speicherkarte oder Reinigungskarte zwei beträgt.

## Claims

1. Method for operating a trip recorder (1) of a motor vehicle, in which, following insertion of a memory card into a slot (2) in the trip recorder (1), a drive (8) for fully drawing-in the memory card is started and then an attempt is made to establish communication between the memory card, which is fully drawn into the slot (2), and the trip recorder (1), wherein, when there is no communication between the memory card and the trip counter (1), the drive (8) is activated in order to move the memory card a short way out of the slot (2) and back in again, and wherein communication is then re-established between the memory card, which is inserted into the slot (2), and the trip counter (1), and wherein the drive (8) is also activated for any card without a memory, **characterized in that** a cleaning card (3) with a cleaning surface which is appropriately designed to clean the read device is provided for cleaning contacts of the trip recorder (1), said cleaning card producing faulty communication with the trip recorder (1), and **in that** the drive for drawing the memory card or cleaning card (3) out of the slot (2) and back into the slot (2) is activated twice in immediate succession.

2. Method according to Claim 1, **characterized in that** the memory card of the cleaning card is ejected from the slot after a stipulated number of futile attempts at establishing communication between the memory card and the device and subsequent activation of the drive.

3. Method as claimed in at least one of the preceding claims, **characterized in that** the number of attempts to establish communication and subsequent movement of the memory card or cleaning card is two.

## Revendications

1. Procédé pour faire fonctionner un tachygraphe (1) d'un véhicule automobile, dans lequel après l'introduction d'une carte de mémoire dans une fente (2) du tachygraphe (1), un entraînement (8) est démarré pour faire entrer complètement la carte de mémoire puis dans lequel la tentative de communication est établie entre la carte de mémoire entièrement rentrée dans la fente (2) et le tachygraphe ;
en cas de défaut de communication de la carte de mémoire avec le tachygraphe (1), l'entraînement (8) étant commandé de façon à faire re-sortir légèrement la carte de mémoire hors de la fente (2) et à la faire re-rentrer et une communication étant ensuite de nouveau établie entre la carte de mémoire introduite dans la fente (2) et le tachygraphe (1) et la commande de l'entraînement (8) s'effectuant également pour une carte quelconque sans mémoire ;
**caractérisé en ce que** :
pour le nettoyage des contacts du tachygraphe (1), une carte de nettoyage (3) avec une surface de nettoyage conçue de façon correspondante pour le nettoyage du dispositif de lecture est prévue, cette carte engendrant un défaut de communication avec le tachygraphe (1) et que les commandes d'entraînement destinées à faire sortir la carte de mémoire ou la carte de nettoyage (3) hors de la fente (2) puis à la faire re-rentrer dans la fente (2) une deuxième fois sont exécutées directement à la suite l'une de l'autre.

2. Procédé selon la revendication 1, **caractérisé en ce qu'**après un nombre prévu de tentatives infructueuses pour établir la communication entre la carte de mémoire et l'appareil puis commander l'entraînement, la carte de mémoire ou la carte de nettoyage est éjectée.

3. Procédé selon au moins l'une quelconque des revendications précédentes, **caractérisé en ce que** le nombre de tentatives d'établissement de la communication puis de mise en mouvement de la carte de mémoire ou de la carte de nettoyage est de deux.
